# DEMANDE DE BREVET EUROPEEN

(11) **EP 2 600 287 A1**
(43) Date de publication de la demande: **05.06.2013**
(21) Numéro de dépôt: 11306595.7
(22) Date de dépôt: 01.12.2011
(51) Int. Cl.: G06K 19/07, G06K 19/077

(54) **Dispositif électronique comprenant des éléments gérés par des protocoles normés différents et méthode de gestion de la communication entre ces éléments**

(71) Demandeur: Gemalto SA, 92190 Meudon (FR)
(72) Inventeur: Thill, Michel, 92190 Meudon (FR); Yan, Charles, 92190 Meudon (FR); Gressus, Yvan, 92190 Meudon (FR)

(57) **Abrégé**

Les modes de réalisation de la présente invention concernent un dispositif électronique destiné à être utilisé dans un équipement portable (1), ledit dispositif comprenant :
- un micro-contrôleur (13) configuré pour communiquer avec une première interface (5) de l'équipement portable selon un premier protocole, ladite première interface (5) fournissant une tension d'alimentation au micro-contrôleur (13), ladite tension d'alimentation étant normalisée par ledit premier protocole,
- un composant sécurisé à puce électronique (15) configuré pour communiquer avec une deuxième interface (7) de l'équipement portable selon un deuxième protocole, ladite deuxième interface (7) fournissant une tension d'alimentation au composant sécurisé (15), ladite tension d'alimentation étant normalisée par ledit deuxième protocole,
- des moyens de communication (17) entre le composant sécurisé (15) et le micro-contrôleur (13),
dans lequel les moyens de communication (17) comprennent un module d'adaptation de tension (19) en fonction des tensions d'alimentation fournies par la première et la deuxième interfaces.

## Description

La présente invention concerne le domaine des cartes à puce et plus particulièrement des cartes à puce destinées à être installées dans des équipements mobiles ou équipements portables comme par exemple des téléphones intelligents (smartphones) et comprenant des éléments gérés par des protocoles normés différents, ces éléments pouvant être fixes (soudés) ou amovibles.

En effet, les équipements portables deviennent de plus en plus multifonctionnels afin de pouvoir gérer un ensemble d'applications à partir d'un seul équipement. Ces nouvelles applications concernent par exemple des communications sans contact en champ proche qui peuvent être utilisées pour le paiement sans contact ou pour les abonnements comme pour les transports en communs dans lesquels l'équipement portable correspond à un transpondeur et interagit avec un lecteur externe dédié.

Par ailleurs, il apparaît évident que ces applications doivent être sécurisées. Pour cela, on utilise des composants de cartes à puce sécurisées qui sont installés dans le téléphone et qui regroupent les éléments sécurisés pour les différentes applications.

D'autres part, des moyens de communication sont nécessaires entre les éléments des différentes applications pour permettre le bon fonctionnement de ces applications. Par exemple, les éléments d'une application de transmission sans contact pour les transports en commun doivent pouvoir communiquer avec les éléments sécurisés gérant une connexion Internet afin de permettre le rechargement, via un serveur, des crédits de l'application transports en commun.

Or, ces différentes applications étant gérées par des protocoles distincts, les éléments des différentes applications peuvent être alimentés par des tensions d'alimentation différentes ce qui peut provoquer des conflits au niveau des tensions utilisées entre les différents éléments et conduire à un dysfonctionnement voire à une dégradation de l'équipement portable.

La nécessité est donc de proposer une solution permettant d'éviter les conflits de tension entre les éléments constituants de différentes applications.

Ainsi, la présente invention concerne un dispositif électronique destiné à être utilisé dans un équipement portable, ledit dispositif comprenant :
- un micro-contrôleur configuré pour communiquer avec une première interface de l'équipement portable selon un premier protocole, ladite première interface fournissant une tension d'alimentation au micro-contrôleur, ladite tension d'alimentation étant normalisée par ledit premier protocole,
- un composant sécurisé à puce électronique configuré pour communiquer avec une deuxième interface de l'équipement portable selon un deuxième protocole, ladite deuxième interface fournissant une tension d'alimentation au composant sécurisé, ladite tension d'alimentation étant normalisée par ledit deuxième protocole,
- des moyens de communication entre le composant sécurisé et le micro-contrôleur,
   dans lequel les moyens de communication comprennent un module d'adaptation de tension en fonction des tensions d'alimentation fournies par la première et la deuxième interfaces.

Selon un aspect additionnel de la présente invention, la deuxième interface est une interface hybride pouvant communiquer selon deux protocoles distincts selon l'état de l'équipement portable, ladite deuxième interface étant configurée pour fournir une tension d'alimentation au composant sécurisé qui est normalisée selon l'un des deux protocoles distincts lorsque l'équipement portable est activé et selon l'autre des deux protocoles distincts lorsque l'équipement portable est éteint et dans lequel le composant sécurisé est configuré pour communiquer avec ladite deuxième interface selon l'un ou l'autre des deux protocoles distincts.

Selon un aspect supplémentaire de la présente invention, le dispositif électronique comprend également une mémoire non volatile contrôlée par le micro-contrôleur et alimentée par une tension d'alimentation fournie par la première interface et normalisée selon ledit premier protocole.

Selon un autre aspect de la présente invention, le premier protocole est un protocole de type SD et le deuxième protocole comprend un protocole de type SWP et un protocole de type ISO 7816, ladite deuxième interface fournissant une tension d'alimentation au composant sécurisé normalisée selon le protocole ISO 7816 lorsque l'équipement portable est activé.

Selon un aspect supplémentaire de la présente invention, les moyens de communication entre le composant sécurisé et le micro-contrôleur sont normalisés selon un protocole ISO 7816.

Selon un aspect supplémentaire de la présente invention, le micro-contrôleur et le composant sécurisé comprennent respectivement des premiers et des seconds contacts ISO 7816, le module d'adaptation de tension des moyens de communication étant configuré de manière à ce que, lorsque l'équipement portable est activé :
- lorsqu'une alimentation est fournie par la première interface,
   les premiers contacts ISO 7816sont alimentés par une tension correspondant à la tension d'alimentation fournie par la première interface,
   les deuxièmes contacts ISO 7816 sont alimentés par une tension correspondant à la tension d'alimentation du composant sécurisé par la deuxième interface de l'équipement portable,
- lorsqu'aucune alimentation n'est fournie par la première interface,
   les premiers contacts ISO 7816 sont dans un état haute impédance,
   les deuxièmes contacts ISO 7816 sont commandés par des circuits de rappel vers le niveau bas ou le niveau haut pour les rendre inactifs,

Selon un aspect additionnel de la présente invention, le micro-contrôleur et le composant sécurisé comprennent respectivement des premiers et des seconds contacts ISO 7816, le module d'adaptation de tension des moyens de communication étant configuré de manière à ce que, lorsque l'équipement portable est éteint :
- lorsqu'une alimentation est fournie par la deuxième interface,
   les premiers contacts ISO 7816 sont dans un état haute impédance,
   les deuxièmes contacts ISO 7816 sont commandés par des circuits de rappel vers le niveau bas ou vers le niveau haut pour les rendre inactifs,
- lorsqu'aucune alimentation n'est fournie par la deuxième interface,
   les premiers et deuxièmes contacts ISO 7816 sont dans un état haute impédance

Selon un autre aspect de la présente invention, les premiers et deuxièmes contacts ISO 7816 comprennent un contact remise à zéro, un contact horloge et un contact entrée/sortie.

Les modes de réalisation de la présente invention concernent également un équipement portable comportant :
- un dispositif électronique,
- une première interface,
- une deuxième interface,
- des moyens d'alimentation permettant d'alimenter la première et la deuxième interface lorsque l'équipement portable est activé.

Selon un autre aspect de la présente invention, la première interface comprend une interface hôte de type SD et la deuxième interface comprend une interface d'échange avec un système de communication en champ proche frontal sans contact.

Selon un aspect supplémentaire de la présente invention, la tension d'alimentation fournie par la première interface correspond à une tension d'alimentation normalisée par le protocole SD comprise entre 2,7 et 3,6 volts et dans lequel la tension d'alimentation fournie par la deuxième interface, lorsque ledit équipement portable est activé, correspond à une tension d'alimentation normalisée par un protocole de type ISO 7816correspondant à une première ou une deuxième classe, la première classe correspondant à une tension comprise entre 1,72 et 1,98 volts et la deuxième classe correspondant à une tension comprise entre 2,7 et 3,3 volts.

Selon un aspect additionnel de la présente invention, la classe de la tension d'alimentation normalisée par le protocole ISO 7816 dépend d'une négociation entre un contrôleur de l'équipement portable et un module d'identité souscripteur.

Selon un autre aspect de la présente invention, lors d'une communication en champ proche frontal sans contact entre le système de communication en champ proche frontal sans contact situé dans l'équipement portable et un lecteur externe à l'équipement portable et lorsque l'équipement portable est éteint, la dite deuxième interface est alimentée par ledit lecteur externe via le système de communication en champ proche frontal sans contact avec une tension d'alimentation normalisée par un protocole SWP comprise entre 1,72 et 1,98 volts.

Les modes de réalisation de la présente invention concernant également une méthode d'adaptation de la tension dans un équipement portable comprenant
- un micro-contrôleur apte à communiquer avec une première interface de l'équipement portable selon un premier protocole, ladite première interface fournissant une tension d'alimentation au micro-contrôleur, ladite tension d'alimentation étant normalisée par ledit premier protocole,
- un composant sécurisé à puce électronique apte à communiquer avec une deuxième interface de l'équipement portable selon un deuxième protocole, ladite deuxième interface fournissant une tension d'alimentation au composant sécurisé, ladite tension d'alimentation étant normalisée par ledit deuxième protocole,
- des moyens de communication entre le composant sécurisé et le micro-contrôleur,
   dans laquelle on adapte les tensions transmises au composant sécurisé et au micro-contrôleur par les moyens de communication en fonction des tensions d'alimentation fournies par la première et la deuxième interface.

Selon un aspect additionnel de a présente invention, la deuxième interface est une interface hybride pouvant communiquer selon deux protocoles distincts selon l'état de l'équipement portable, ladite deuxième interface fournissant une tension d'alimentation au composant sécurisé qui est normalisée selon l'un des deux protocoles distincts lorsque l'équipement portable est activé et selon l'autre des deux protocoles distincts lorsque l'équipement portable est éteint.

Selon un autre aspect de la présente invention, le premier protocole est un protocole de type SD et le deuxième protocole comprend les protocoles de type SWP et de type ISO 7816, le protocole de type ISO 7816 étant utilisé lorsque l'équipement portable est activé.

Selon un aspect additionnel de la présente invention, les moyens de communication comprennent une connexion de type ISO 7816 entre des premiers contacts ISO 7816 situés au niveau du micro-contrôleur et des deuxièmes contacts ISO 7816 situés au niveau du composant sécurisé de sorte que lorsque l'équipement portable est activé,
- lorsqu'une alimentation est fournie par la première interface,
   on alimente les premiers contacts ISO 7816 par une tension correspondant à la tension d'alimentation fournie par la première interface et,
   on alimente les deuxièmes contacts ISO 7816 par une tension correspondant à la tension d'alimentation du composant sécurisé par la deuxième interface de l'équipement portable,
- lorsqu'aucune alimentation n'est fournie par la première interface,
   on met les premiers contacts ISO 7816 dans un état haute impédance et,
   on commande les deuxièmes contacts ISO 7816 par des circuits de rappel vers le niveau bas ou le niveau haut pour les rendre inactifs,

Selon un autre aspect de la présente invention, les moyens de communication comprennent une connexion de type ISO 7816 entre des premiers contacts ISO situés au niveau 7816 du micro-contrôleur et des deuxièmes contacts ISO 7816 situés au niveau du composant sécurisé de sorte que lorsque l'équipement portable est éteint,
- lorsqu'une alimentation est fournie par la deuxième interface,
on met les premiers contacts ISO 7816 dans un état haute impédance et,
on commande les deuxièmes contacts ISO 7816 par des circuits de rappel vers le niveau bas ou vers le niveau haut pour les rendre inactifs.

D'autres caractéristiques et avantages de l'invention apparaîtront dans la description qui va maintenant en être faite, en référence aux dessins annexés qui en représentent, à titre indicatif mais non limitatif, un mode de réalisation possible. Par ailleurs, les numéros de référence comportant un nombre et une lettre désignent les sous-éléments d'une référence commune définie par le nombre.

Sur ces dessins:

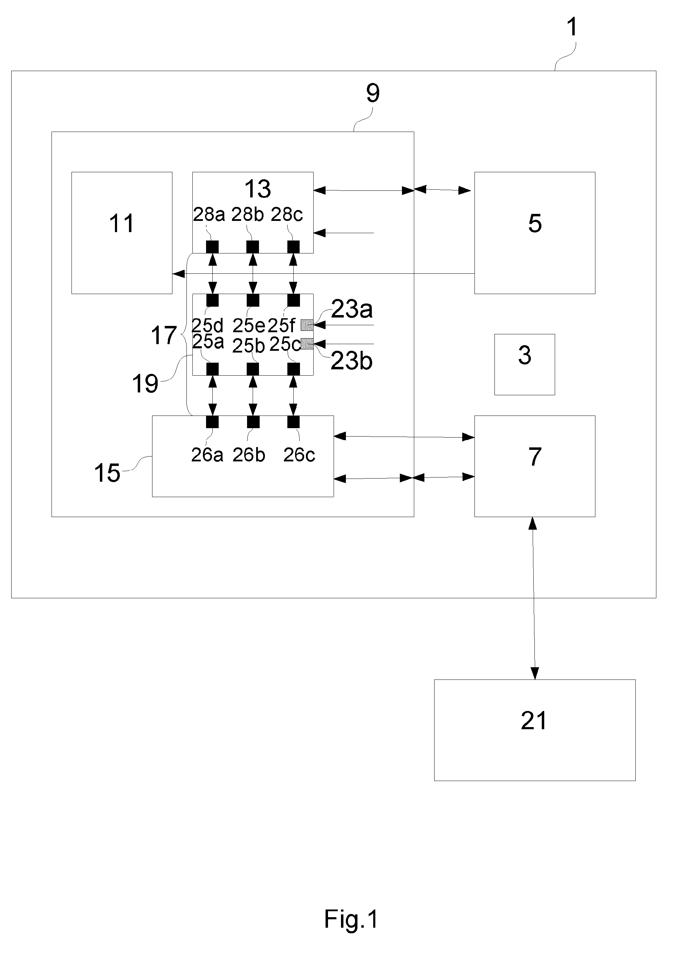

- la figure 1 représente un schéma d'un équipement portable selon un mode de réalisation de la présent invention;

Dans la description qui va suivre, on désigne de façon générale:
- Le terme « SD » est l'acronyme anglais Secure Digital et correspond à un format de carte mémoire non volatile utilisant un protocole de communication normalisé;
- Le terme « SWP » est l'acronyme anglais Single Wire Protocol (protocole simple fil) et correspond à un protocole de communication normalisé, généralement utilisé entre une carte de type SIM (Subscriber Identification Module (module d'identification utilisateur)) et une interface de communication en champ proche;
- Le terme « ISO » est l'acronyme anglais International Standard Organization (Organisation Internationale de normalisation) ;
- Le terme « UICC » est l'acronyme anglais Universal Integrated Circuit Card (carte à puce universelle).

Les modes de réalisation de la présente invention concernent un dispositif électronique comprenant un module d'adaptation de tension afin d'éviter les conflits de tension entre les éléments alimentés par des tensions d'alimentation différentes.

La figure 1 représente un schéma d'un équipement portable 1, par exemple un téléphone portable, comprenant des moyens d'alimentation 3 comme par exemple une batterie, une interface hôte de type SD (ou « host SD » en anglais) 5 et une interface de communication sans contact en champ proche frontal (ou « near-filed communication (NFC) » ou « contactless front-end field communication (CLF) » en anglais) 7. Les deux interfaces 5 et 7 étant alimentées par les moyens d'alimentation 3 lorsque l'équipement portable est activé. L'équipement portable comprend également un dispositif électronique 9, par exemple une carte mémoire (ou « memory card » en anglais) embarquant un élément de sécurité et comprenant une mémoire non volatile 11, de type Nand par exemple, un micro-contrôleur 13 de la mémoire non volatile et un composant sécurisé à puce électronique 15, par exemple un circuit intégré sécurisé de type carte à puce.

Il est à noter que les modes de réalisation de l'invention s'étendent également à une configuration dans laquelle il n'y a pas de mémoire non volatile et dans laquelle le micro-contrôleur 13 simule l'existence d'une mémoire vis-à-vis de l'interface hôte de type SD 5.Le micro-contrôleur 13 est géré par un protocole de type SD et est configuré pour communiquer avec l'interface hôte de type SD 5 selon un protocole de type SD. De plus, la mémoire non volatile 11 et le micro-contrôleur 13 sont alimentés par une tension d'alimentation Vcc SD via l'interface hôte de type SD. Cette tension Vcc SD est normalisée par le protocole SD et est comprise entre 2,7 et 3,6V. Cependant, cette tension Vcc SD n'est active que lorsque l'interface hôte SD est activée et est de 0V lorsqu'elle n'est pas activée.

Le composant sécurisé 15 est configuré pour communiquer avec l'interface de communication sans contact en champ proche 7 selon un protocole ISO 7816 lorsque l'équipement portable est activé. De plus, le composant sécurisé est alimenté par une tension d'alimentation Vcc SIM via l'interface de communication sans contact en champ proche 7. Cette tension est notée Vcc SIM car l'interface de communication sans contact en champ proche 7 alimente également la carte SIM ou UICC avec la même tension Vcc SIM. Cette tension varie en fonction de la classe de la carte SIM ou UICC et résulte d'une négociation entre un module d'identité souscripteur comme la carte SIM ou UICC et un contrôleur de l'équipement portable 1. Cette tension Vcc SIM est comprise entre 1,72 et 1,98V (1,8V+/-10%) dans le cas d'une carte de classe C et entre 2,7 et 3,3V (3V+/-10%) dans le cas d'une carte de classe B.

D'autre part, dans le cas d'une communication entre l'interface de communication sans contact en champ proche 7 et un lecteur externe 21, ledit lecteur externe 21 fourni de l'énergie à l'interface de communication sans contact en champ proche 7, ce qui permet d'alimenter le composant sécurisé même si l'équipement portable est inactivé. Dans ce cas, la tension d'alimentation Vcc SIM fournie au composant sécurisé est normalisée par le protocole utilisé par l'interface de communication sans contact en champ proche 7, par exemple une protocole SWP pour lequel la tension d'alimentation est comprise entre 1,72 et 1,98V.

Le dispositif électronique 9 comprend également des moyens de communication 17 entre le micro-contrôleur 13 et le composant sécurisé 15. Les moyens de communication 17 correspondent à une connexion de type ISO 7816 qui connecte trois contacts du micro-contrôleur 13 à trois contacts correspondants du composant sécurisé 15, ces trois contacts correspondant à un signal de remise zéro (ou « reset » en anglais), à un signal d'horloge (ou « clock » en anglais) et à un signal d'entrée sortie (ou « input/output » en anglais).

Cependant comme les tension d'alimentation du micro-contrôleur 13 et du composant sécurisé sont différentes et varient au cours du temps en fonction de l'activation de l'équipement portable et de l'interface hôte de type SD, les moyens de communication 17 comprennent également un module d'adaptation de tension 19 afin d'éviter tout conflit de tension lors d'une communication entre le micro-contrôleur 13 et le composant sécurisé 15 ce qui pourrait provoquer un dysfonctionnement voire une dégradation de l'équipement portable 1.

Le module d'adaptation de tension 19 comprend deux entrées 23a et 23b reliées respectivement aux tensions d'alimentation Vcc SD et Vcc SIM fournies par l'interface hôte de type SD et l'interface de communication sans contact en champ proche et six contacts, trois 25a, 25b, 25c reliés respectivement aux trois contacts ISO 7816 26a, 26b, 26c du micro-contrôleur 13 et trois 25d, 25e, 25f reliés respectivement aux trois contacts ISO 7816 28a, 28b, 28c du composant sécurisé 15.

Ainsi, les tensions des signaux transmis sur les différents contacts du module d'adaptation de tension dépendent des tensions d'alimentation reçues au niveau des deux entrées 23a et 23b.

Les différentes configurations du module d'adaptation de tension 19 en fonction de l'état de l'interface hôte de type SD 5 et de l'état de l'interface de communication sans contact en champ proche 7 vont maintenant être décrites :
Première situation : L'équipement portable est activé et l'interface hôte de type SD est activée :
   La tension Vcc SD est comprise entre 2,7 et 3,6V et la tension Vcc SIM est soit comprise entre 1,72 et 1,98V, soit entre 2,7 et 3,3V, en fonction de la classe de la carte SIM ou carte UICC de l'équipement portable.
   Les tensions des signaux transmis par le module d'adaptation de tension 19 vers les contacts ISO 7816 du micro-contrôleur 13 sont alors comprises entre 2,7 et 3,6V tandis que les tensions des signaux transmis par le module d'adaptation de tension 19 vers les contacts ISO 7816 du composant sécurisé sont alors comprises entre 1,72 et 1,98V si la Vcc SIM est comprise entre 1,72 et 1,98V et entre 2,7 et 3,3V si la Vcc SIM est comprise entre 2,7 et 3,3V
Deuxième situation : L'équipement portable est activé et l'interface hôte de type SD est désactivée :
   La tension Vcc SD est de 0V et la tension Vcc SIM est soit comprise entre 1,72 et 1,98V, soit entre 2,7 et 3,3V
   Les contacts ISO 7816 du micro-contrôleur 13 sont alors reliés à un état haute impédance tandis que les contacts ISO 7816 du composant sécurisé sont commandés par des circuits de rappel vers le niveau bas ou vers le niveau haut (pull-up et pull-down) pour les rendre inactifs.
Troisième situation : L'équipement portable est inactivé et il n'y a pas de communication sans contact en champ proche avec un lecteur externe :
   La tension Vcc SD est de 0V et la tension Vcc SIM est de 0V.
   Les différents contacts sont alors à 0V.
Quatrième situation : L'équipement portable est inactivé et il y a une communication sans contact en champ proche avec un lecteur externe :
   La tension Vcc SD est de 0V et la tension Vcc SIM est comprise entre 1,72 et 1,98V
   Les contacts ISO 7816 du micro-contrôleur 13 sont alors reliés à un état haute impédance tandis que les contacts ISO 7816 du composant sécurisé sont commandés par des circuits de rappel vers le niveau bas ou vers le niveau haut (pull-up et pull-down) pour les rendre inactifs.

De plus, le module d'adaptation de tension 19 a un mode de fonctionnement dynamique de manière à prendre en compte une modification d'une tension d'alimentation, par exemple si l'interface hôte de type SD devient active lors d'une communication sans contact. Ainsi, tous les schémas de changement d'au moins une des tensions d'alimentation sont pris en compte et gérés par le module d'adaptation de tension 19 pour éviter un conflit de tension entre le micro-contrôleur 13 et le composant sécurisé 15.

Afin de mieux comprendre la présente invention, un exemple d'utilisation d'un équipement portable, ici un téléphone portable, comprenant un dispositif électronique tel que décrit précédemment va maintenant être décrit.

Le téléphone portable 1 comprend une interface hôte de type SD 5 pour effectuer des transmissions sécurisées avec une carte mémoire (ou « smart card » en anglais) 9 et une interface de communication sans contact en champ proche 7 pour une application abonnement du métropolitain. Dans cette application, l'interface de communication sans contact en champ proche 7 comprend une antenne et agit comme un transpondeur de sorte que lorsqu'un utilisateur muni de son téléphone portable 1 franchit un portique d'entrée du métropolitain comprenant un lecteur sans contact en champ proche 21, le signal radiofréquence émis par le lecteur 21 alimente le transpondeur, c'est à dire l'interface de communication en champ proche 7 qui peut alors renvoyer un signal vers le lecteur 21. Ce signal comprend par exemple une information sur la validité de l'abonnement de l'utilisateur. Un abonnement valide provoquant alors l'ouverture d'une porte d'accès vers le métropolitain. De plus, l'alimentation de l'interface de communication sans contact par le lecteur permet à ladite interface d'alimenter le composant sécurisé 15, par exemple une puce électronique de type circuit de carte à puce, même lorsque le téléphone portable 1 est éteint, et d'établir une communication selon un protocole simple fil (ou « Single Wire Protocol (SWP) » en anglais) et c'est ce circuit de carte à puce qui assure la gestion de l'application abonnement au métropolitain. Ainsi, si l'abonnement comprend des crédits correspondant à des trajets, lorsque l'utilisateur passe le portique d'accès du métropolitain, l'interaction avec le lecteur 21 provoque le décrément du nombre de crédits restants au niveau du circuit de carte à puce, quelque soit l'état du téléphone portable (activé ou éteint).

Par ailleurs, pour recharger son abonnement ou acheter ses crédits, l'utilisateur du téléphone portable se connecte via son téléphone portable 1 au serveur de la société gérant le métropolitain. La recharge de crédits au niveau du circuit de carte à puce se fait par l'intermédiaire de l'interface hôte SD 5 et du micro-contrôleur 13 puis via la connexion ISO 7816 17 entre le micro-contrôleur 13 et le circuit de carte à puce 15. Lors de la communication via la connexion ISO 7816 17, l'adaptation de tension entre le micro-contrôleur 13 et le circuit de carte à puce 15 est réalisée par le module d'adaptation de tension 19.
De plus, il est à noter que les modes de réalisation de la présente invention ne se limitent pas aux protocoles mentionnés ci-dessus mais s'étendent à d'autres protocoles comme par exemple le protocole carte multimédia (MultiMedia Card (MMC.) en anglais).

Ainsi, l'implémentation d'un module d'adaptation de tension 19 au niveau des moyens de communications 17 entre le micro-contrôleur 13 lié à l'application SD et le composant sécurisé 15 lié à l'application de communication sans contact en champ proche, en fonction des tensions d'alimentation fournies au micro-contrôleur 13 et au composant sécurisé 15 permet d'éviter tout conflit de tension, quelque soit leur ordre d'arrivée et de disparition de ce tensions d'alimentation et permet ainsi le bon fonctionnement des différentes applications de l'équipement portable 1.

## Revendications

1. Dispositif électronique (9) destiné à être utilisé dans un équipement portable (1), ledit dispositif électronique (9) comprenant :
- un micro-contrôleur (13) configuré pour communiquer avec une première interface (5) de l'équipement portable (1) selon un premier protocole, ladite première interface (5) fournissant une tension d'alimentation au micro-contrôleur (13), ladite tension d'alimentation étant normalisée par ledit premier protocole,
- un composant sécurisé à puce électronique (15) configuré pour communiquer avec une deuxième interface (7) de l'équipement portable (1) selon un deuxième protocole, ladite deuxième interface (7) fournissant une tension d'alimentation au composant sécurisé (15), ladite tension d'alimentation étant normalisée par ledit deuxième protocole,
- des moyens de communication (17) entre le composant sécurisé (15) et le micro-contrôleur (13),
**caractérisé en ce que** les moyens de communication (17) comprennent un module d'adaptation de tension (19) en fonction des tensions d'alimentation fournies par la première et la deuxième interfaces.

2. Dispositif électronique selon la revendication 1 dans lequel la deuxième interface (7) est une interface hybride pouvant communiquer selon deux protocoles distincts selon l'état de l'équipement portable (1), ladite deuxième interface (7) étant configurée pour fournir une tension d'alimentation au composant sécurisé (15) qui est normalisée selon l'un des deux protocoles distincts lorsque l'équipement portable (1) est activé et selon l'autre des deux protocoles distincts lorsque l'équipement portable est éteint et dans lequel le composant sécurisé (15) est configuré pour communiquer avec ladite deuxième interface (7) selon l'un ou l'autre des deux protocoles distincts.

3. Dispositif électronique (9) selon la revendication 1 ou 2 comprenant également une mémoire non volatile (11) contrôlée par le micro-contrôleur (13) et alimentée par une tension d'alimentation fournie par la première interface (5) et normalisée selon ledit premier protocole.

4. Dispositif électronique (9) selon la revendication 2 ou 3 dans lequel le premier, protocole est un protocole de type SD et le deuxième protocole comprend un protocole de type SWP et un protocole de type ISO 7816, ladite deuxième interface (7) fournissant une tension d'alimentation au composant sécurisé (15) normalisée selon le protocole ISO 7816 lorsque l'équipement portable est activé.

5. Dispositif électronique (9) selon l'une des revendications précédentes dans lequel les moyens de communication (17) entre le composant sécurisé (15) et le micro-contrôleur (13) sont normalisés selon un protocole ISO 7816.

6. Dispositif électronique (9) selon l'une des revendications précédentes dans lequel le micro-contrôleur (13) et le composant sécurisé (15) comprennent respectivement des premiers (28) et des seconds (26) contacts ISO 7816, le module d'adaptation de tension (19) des moyens de communication (17) étant configuré de manière à ce que, lorsque l'équipement portable (1) est activé :
- lorsqu'une alimentation est fournie par la première interface (5),
les premiers contacts ISO 7816 (28) sont alimentés par une tension correspondant à la tension d'alimentation fournie par la première interface (5),
les deuxièmes contacts ISO 7816 (26) sont alimentés par une tension correspondant à la tension d'alimentation du composant sécurisé (15) par la deuxième interface (7) de l'équipement portable (1),
- lorsqu'aucune alimentation n'est fournie par la première interface (5),
les premiers contacts ISO 7816 (28) sont dans un état haute impédance,
les deuxièmes contacts ISO 7816 (26) sont commandés par des circuits de rappel vers le niveau bas ou le niveau haut pour les rendre inactifs,

7. Dispositif électronique (9) selon l'une des revendications précédentes dans lequel le micro-contrôleur (13) et le composant sécurisé (15) comprennent respectivement des premiers (28) et des seconds (26) contacts ISO 7816, le module d'adaptation de tension (19) des moyens de communication (17) étant configuré de manière à ce que, lorsque l'équipement portable (1) est éteint :
- lorsqu'une alimentation est fournie par la deuxième interface (7),
les premiers contacts ISO 7816 (28) sont dans un état haute impédance, les deuxièmes contacts ISO 7816 (26) sont commandés par des circuits de rappel vers le niveau bas ou vers le niveau haut pour les rendre inactifs,
- lorsqu'aucune alimentation n'est fournie par la deuxième interface (7),
les premiers (28) et deuxièmes (26) contacts ISO 7816 sont dans un état haute impédance.

8. Dispositif électronique (9) selon la revendication 5 ou 6 dans lequel les premiers (28) et deuxièmes (26) contacts ISO 7816 comprennent un contact remise à zéro (28a ; 26a), un contact horloge (28b ; 26b) et un contact entrée/sortie (28c ; 26c).

9. Equipement portable (1) comportant :
- un dispositif électronique (9) selon l'une des revendications précédentes,
- une première interface (5),
- une deuxième interface (7),
- des moyens d'alimentation (3) permettant d'alimenter la première (5) et la deuxième (7) interface lorsque l'équipement portable (1) est activé.

10. Equipement portable (1) selon la revendication 9 dans lequel la première interface (5) comprend une interface hôte de type SD et la deuxième interface (7) comprend une interface d'échange avec un système de communication en champ proche frontal sans contact.

11. Equipement portable (1) selon la revendication 10 dans lequel la tension d'alimentation fournie par la première interface (5) correspond à une tension d'alimentation normalisée par le protocole SD comprise entre 2,7 et 3,6 volts et dans lequel la tension d'alimentation fournie par la deuxième interface (7), lorsque ledit équipement portable est activé, correspond à une tension d'alimentation normalisée par le protocole ISO 7816 correspondant à une première ou une deuxième classe, la première classe correspondant à une tension comprise entre 1,72 et 1,98 volts et la deuxième classe correspondant à une tension comprise entre 2,7 et 3,3 volts.

12. Equipement portable (1) selon la revendication 11 dans lequel la classe de la tension d'alimentationnormalisée par le protocole ISO 7816 dépend d'une négociation entre un contrôleur de l'équipement portable (1) et un module d'identité souscripteur.

13. Equipement portable (1) selon l'une des revendications 10 à 12 dans lequel lors d'une communication en champ proche frontal sans contact entre le système de communication en champ proche frontal sans contact et un lecteur externe (21) à l'équipement portable (1) et lorsque l'équipement portable est éteint, ladite deuxième interface (7) est alimentée par ledit lecteur externe (21) via le système de communication en champ proche frontal sans contact avec une tension d'alimentation normalisée par un protocole SWP comprise entre 1,72 et 1,98 volts.

14. Méthode d'adaptation de la tension dans un équipement portable (1) comprenant :
- un micro-contrôleur (13) apte à communiquer avec une première interface (5) de l'équipement portable (1) selon un premier protocole, ladite première interface (5) fournissant une tension d'alimentation au micro-contrôleur (13), ladite tension d'alimentation étant normalisée par ledit premier protocole,
- un composant sécurisé à puce électronique (15) apte à communiquer avec une deuxième interface (7) de l'équipement portable (1) selon un deuxième protocole, ladite deuxième interface fournissant une tension d'alimentation au composant sécurisé (15), ladite tension d'alimentation étant normalisée par ledit deuxième protocole,
- des moyens de communication (17) entre le composant sécurisé (15) et le micro-contrôleur (13),
dans laquelle on adapte les tensions transmises au composant sécurisé (15) et au micro-contrôleur (13) par les moyens de communication (17) en fonction des tensions d'alimentation fournies par la première (5) et la deuxième (7) interface .

15. Méthode selon la revendication 14 dans laquelle la deuxième interface (7) est une interface hybride pouvant communiquer selon deux protocoles distincts selon l'état de l'équipement portable (1), ladite deuxième interface (7) fournissant une tension d'alimentation au composant sécurisé (15) qui est normalisée selon l'un des deux protocoles distincts lorsque l'équipement portable (1) est activé et selon l'autre des deux protocoles distincts lorsque l'équipement portable est éteint.

16. Méthode selon la revendication 15 dans laquelle le premier protocole est un protocole de type SD et le deuxième protocole comprend les protocoles de type SWP et de type ISO 7816, le protocole de type ISO 7816 étant utilisé lorsque l'équipement portable (1) est activé.

17. Méthode selon la revendication 16 dans laquelle les moyens de communication (17) comprennent une connexion de type ISO 7816 entre des premiers contacts ISO 7816 (28) situés au niveau du micro-contrôleur (13) et des deuxièmes contacts ISO 7816 (26) situés au niveau du composant sécurisé (15) de sorte que lorsque l'équipement portable (1) est activé,
- lorsqu'une alimentation est fournie par la première interface (5),
on alimente les premiers contacts ISO 7816 (28) par une tension correspondant à la tension d'alimentation fournie par la première interface (5) et,
on alimente les deuxièmes contacts ISO 7816 (26) par une tension correspondant à la tension d'alimentation du composant sécurisé (15) par la deuxième interface (7) de l'équipement portable (1),
- lorsqu'aucune alimentation n'est fournie par la première interface (5),
on met les premiers contacts ISO 7816 (28) dans un état haute impédance et,
on commande les deuxièmes contacts ISO 7816 (26) par des circuits de rappel vers le niveau bas ou le niveau haut pour les rendre inactifs,

18. Méthode selon la revendication 16 ou 17 dans laquelle les moyens de communication (17) comprennent une connexion de type ISO 7816 entre des premiers contacts ISO 7816 (28) situés au niveau du micro-contrôleur (13) et des deuxièmes contacts ISO 7816 (26) situés au niveau du composant sécurisé (15) de sorte que lorsque l'équipement portable (1) est éteint,
- lorsqu'une alimentation est fournie par la deuxième interface (7),
on met les premiers contacts ISO 7816 (28) dans un état haute impédance et,
on commande les deuxièmes contacts ISO 7816 (26) par des circuits de rappel vers le niveau bas ou vers le niveau haut pour les rendre inactifs.
